# EUROPÄISCHE PATENTSCHRIFT

(11) **EP 0 600 322 B1**
(45) Veröffentlichungstag und Bekanntmachung des Hinweises auf die Patenterteilung: **15.03.2000**
(21) Anmeldenummer: 93118647.2
(22) Anmeldetag: 19.11.1993
(51) Int. Cl.: C09B 67/22, C09B 67/26, D06P 1/384, C09B 62/507

(54) **Schwarze Farbstoffmischungen von faserreaktiven Azofarbstoffen und ihre Verwendung zum Färben von hydroxy- und/oder carbonamidgruppenhaltigem Fasermaterial**
Black mixtures of reactive azo dyes and their use in dyeing fibrous materials containing hydroxy and/or carbonamide groups
Mélanges de colorants noirs de colorants azoiques réactifs et leur utilisation pour la teinture de matériaux fibreux contenant des groupes hydroxy et/ou carbonamide

(30) Priorität: 28.11.1992 DE 4240069; 16.01.1993 DE 4301025
(43) Veröffentlichungstag der Anmeldung: 08.06.1994
(73) Patentinhaber: DyStar Textilfarben GmbH & Co. Deutschland KG, 60318 Frankfurt am Main (DE)
(72) Erfinder: Hussong, Kurt, Dr., D-65812 Bad Soden/Ts (DE); Russ, Werner Hubert, Dr., D-65439 Flörsheim/Main (DE); Krieger, Karl, D-65510 Hünstetten (DE)

(56) Entgegenhaltungen:
- EP-A- 0 292 955
- GB-A- 2 029 437
- CHEMICAL ABSTRACTS, vol. 112, no. 26, 25. Juni 1990, Columbus, Ohio, US; abstract no. 236899g, Seite 81 ; & PL-A-135 793 (ORGANIKA-ZACHEM) 31. Oktober 1986
- DATABASE WPI Week 8344, Derwent Publications Ltd., London, GB; AN 83-804393 & JP-A-58 160 362 (SUMITOMO CHEMICAL COMPANY) 22. September 1983

## Beschreibung

Die Erfindung liegt auf dem technischen Gebiet der faserreaktiven Farbstoffe.

In der polnischen Patentschrift Nr. 135 793 werden schwarzfärbende Mischungen von faserreaktiven Farbstoffen beschrieben, wobei die faserreaktive Gruppe eine β,β-Dichlorethylsulfonyl- oder β-Chlorvinylsulfonyl-Gruppe ist. Die Einzelfarbstoffe dieser Farbstoffmischungen bestehen aus einem marineblauen Disazofarbstoff mit einer 1-Amino-8-hydroxy-naphthalin-3,6-disulfonsäure als bivalenter Kupplungskomponente und einem 2,5-Disulfophenyl-Rest als der einen und einem Phenylrest mit der besagten faserreaktiven Gruppe als der anderen Diazokomponente und aus einem orangefarbenen Monoazofarbstoff mit der 6,8-Disulfo-2-naphthol-Kupplungskomponente und einem Anilin mit der besagten faserreaktiven Gruppe als Diazokomponente.

Mit der vorliegenden Erfindung wurden nunmehr Farbstoffmischungen gefunden, die einen oder mehrere, wie 1, 2 oder 3, Disazofarbstoffe entsprechend der allgemeinen Formel (1) und einen oder mehrere, wie 1, 2 oder 3, Monoazofarbstoffe entsprechend der allgemeinen Formel (2) 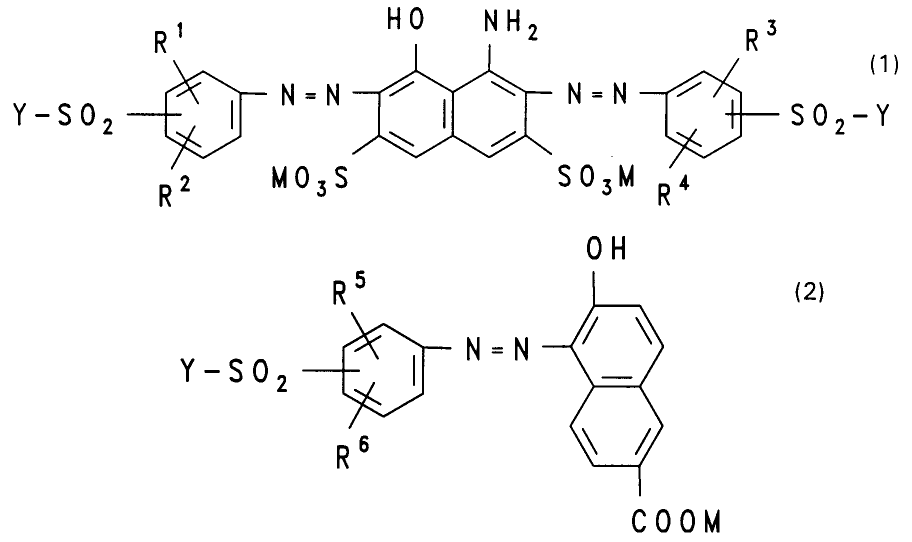 in welchen
- R¹: Methoxy oder Wasserstoff und insbesondere Wasserstoff ist,
- R²: Wasserstoff ist,
- R³: Methoxy oder Wasserstoff und insbesondere Wasserstoff ist,
- R⁴: Wasserstoff ist,
- R⁵: Methoxy oder Wasserstoff und insbesondere Wasserstoff ist,
- R⁶: Wasserstoff ist,
- Y: jedes, unabhängig voneinander, Vinyl, β-Chlorethyl, β-Thiosulfatoethyl oder β-Sulfatoethyl ist,
- M: Wasserstoff oder ein Alkalimetall, wie Lithium, Natrium und Kalium, ist und
die Gruppen -SO₂-Y bevorzugt in meta- oder para-Stellung zur
Azogruppe an den Benzolkern gebunden stehen,
mit einem Gehalt des oder der Disazofarbstoffe der Formel (1) von 50 bis 95 Gew.-% und des oder der Farbstoffe der Formel (2) von 5 bis 50 Gew.-% enthalten.

Die einzelnen Formelglieder in den Formeln (1) und (2) können im Rahmen ihrer Definition zueinander gleiche oder voneinander verschiedene Bedeutungen besitzen.

Die Mischungen können noch mit einem gelben oder roten Farbstoff von bis zu 10 Gew.-%, vorzugsweise bis zu 5 Gew.-%, nuanciert sein. Solche bekannten Farbstoffe sind beispielsweise Monoazofarbstoffe, die den allgemeinen Formeln (a), (b), (c) und (d) 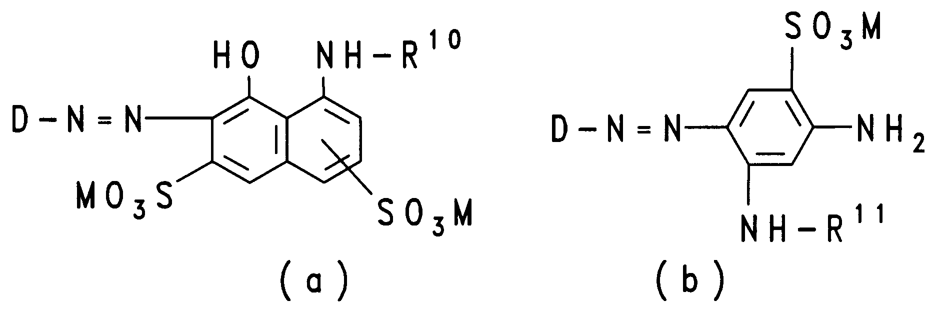 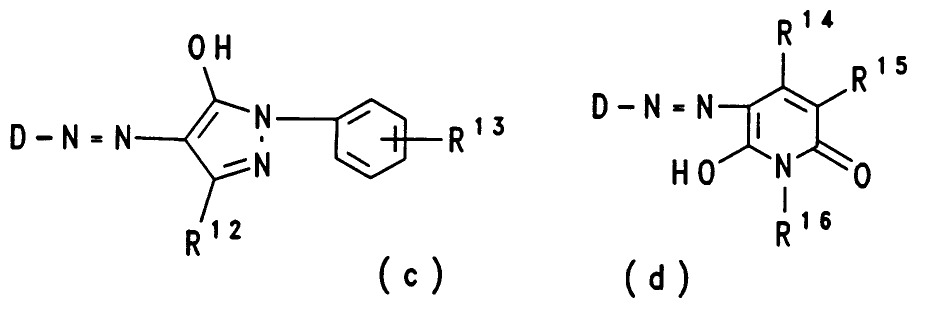 entsprechen, in welchen bedeuten:
- D: ist 3-(β-Sulfatoethylsulfonyl)-phenyl, 4-(β-Sulfatoethylsulfonyl)-phenyl, 3-Vinylsulfonyl-phenyl, 4-Vinylsulfonyl-phenyl, 2-Methoxy-5-(β-sulfatoethylsulfonyl)-phenyl oder 2-Methoxy-5-vinylsulfonyl-phenyl;
- M: hat eine der obengenannten Bedeutungen;
- R¹⁰: ist Acetyl, Benzoyl, 4,6-Di-cyanamido-1,3,5-triazin-2-yl, 4-Cyanamido-6-(sulfophenylamino)-1,3,5-triazin-2-yl, 4-(N-Morpholino)-6-(sulfophenylamino)-1,3,5-triazin-2-yl oder 4-(N-Morpholino)-6-(sulfophenylamino)-1,3,5-triazin-2-yl, das im Benzolkern durch Methyl oder Methoxy substituiert ist;
- R¹¹: ist Acetyl, Carbamoyl, 4,6-Di-cyanamido-1,3,5-triazin-2-yl, 4-Cyanamido-6-(sulfophenylamino)-1,3,5-triazin-2-yl, 4-(N-Morpholino)-6-(sulfophenylamino)-1,3,5-triazin-2-yl oder 4-(N-Morpholino)-6-(sulfophenylamino)-1,3,5-triazin-2-yl, das im Benzolkern durch Methyl oder Methoxy substituiert ist;
- R¹²: ist Methyl oder Carboxy;
- R¹³: ist Sulfo, β-Chlorethylsulfonyl oder β-Sulfatoethylsulfonyl;
- R¹⁴: ist Wasserstoff oder Methyl;
- R¹⁵: ist Wasserstoff, Cyano, Carbamoyl, Carboxy oder Sulfomethyl;
- R¹⁶: ist Methyl, Ethyl oder β-Sulfoethyl.

Die Farbstoffe der allgemeinen Formeln (1) und (2) sind zahlreich in der Literatur beschrieben. So sind die Disazofarbstoffe der allgemeinen Formel (1) beispielsweise aus der U.S.-Patentschrift 2 657 205 und aus der japanischen Patentanmeldungs-Veröffentlichung Sho-58-160 362 sowie aus der U.S.-Patentschrift 4 257 770 und der dort genannten Literatur bekannt. Monoazofarbstoffe der allgemeinen Formel (2) sind in der U.S.-Patentschrift 5 093 483 beschrieben.

Bevorzugt enthalten die Farbstoffmischungen aus den Farbstoffen der allgemeinen Formeln (1) und (2) den oder die Disazofarbstoffe der Formel (1) zu 60 bis 80 Gew.-% und den oder die Monoazofarbstoffe der Formel (2) zu 20 bis 40 Gew.-%.

Eine Sulfogruppe ist eine Gruppe der allgemeinen Formel -SO₃M , eine Carboxygruppe ist eine Gruppe der allgemeinen Formel -COOM , eine Sulfatogruppe ist eine Gruppe der allgemeinen Formel -OSO₃M und eine Thiosulfatogruppe ist eine Gruppe der allgemeinen Formel -S-SO₃M .

Die Farbstoffe der Formel (1) und ebenso die Farbstoffe der Formel (2) können, insbesondere bei gleichem Chromophor, innerhalb der Bedeutung von Y unterschiedliche faserreaktive Gruppen -SO₂-Y besitzen. Insbesondere können die Farbstoffmischungen Farbstoffe gleichen Chromophors entsprechend der allgemeinen Formel (1) und/oder Farbstoffe gleichen Chromophors entsprechend der allgemeinen Formel (2) enthalten, in denen die faserreaktiven Gruppen -SO₂-Y zum einen Vinylsulfonylgruppen und zum anderen β-Chlorethylsulfonyl- oder β-Thiosulfatoethylsulfonyl- oder bevorzugt β-Sulfatoethylsulfonyl-Gruppen sind. Enthalten die Farbstoffgemische die jeweiligen Farbstoffkomponenten in Form eines Vinylsulfonyl-Farbstoffes, so liegt der Farbstoffanteil des jeweiligen Vinylsulfonylfarbstoffes zu dem jeweiligen β-Chlor- oder β-Thiosulfato- oder β-Sulfatoethylsulfonyl-Farbstoff bei bis zu etwa 30 Mol-%, bezogen auf den jeweiligen Farbstoffchromophor vor.

Hierbei sind solche Farbstoffmischungen bevorzugt, bei welchen der Anteil an den Vinylsulfonyl-Farbstoffen zu den β-Sulfatoethylsulfonyl-Farbstoffen im Molverhältnis zwischen 5:95 und 30:70 liegt.

Bevorzugt sind weiterhin Farbstoffmischungen aus einem oder mehreren Disazofarbstoffen entsprechend der allgemeinen Formel (10) und einem oder mehreren Monoazofarbstoffen entsprechend der allgemeinen Formel (11) 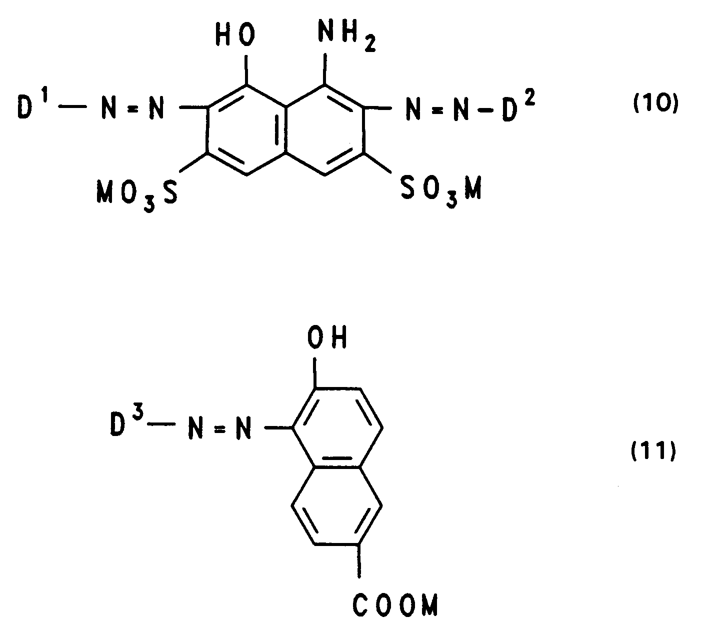 in welchen M eine der obengenannten Bedeutungen besitzt und D¹, D² und D³ jedes, unabhängig voneinander, 3-Vinylsulfonyl-phenyl, 4-Vinylsulfony-phenyl, 3-(β-Sulfatoethylsulfonyl)-phenyl oder 4-(β-Sulfatoethylsulfonyl)-phenyl bedeutet, wobei im Falle, daß sowohl Vinylsulfonyl- als auch β-Sulfatoethylsulfonyl-Gruppen in den Farbstoffmischungen vorliegen, das molare Verhältnis zwischen den Vinylsulfonyl-Anteilen und den β-Sulfatoethylsulfonyl-Anteilen im Molverhältnis zwischen 5:95 und 30:70 liegt.

Weiterhin sind insbesondere Farbstoffmischungen aus einem oder mehreren Farbstoffen der allgemeinen Formel (10) und einem oder mehreren Farbstoffen der allgemeinen Formel (11) bevorzugt, in welchen D¹ und D² beide, unabhängig voneinander, 3-(β-Sulfatoethylsulfonyl)-phenyl, 4-(β-Sulfatoethylsulfonyl)-phenyl, 3-Vinylsulfonyl-phenyl oder 4-Vinylsulfonyl-phenyl bedeuten und D³ 2-Methoxy-5-(β-sulfatoethylsulfonyl)-phenyl oder 2-Methoxy-5-vinylsulfonyl-phenyl ist, wobei im Falle, daß sowohl Vinylsulfonyl- als auch β-Sulfatoethylsulfonyl-Gruppen in den Farbstoffmischungen vorliegen, das molare Verhältnis zwischen den Vinylsulfonyl-Anteilen und den β-Sulfatoethylsulfonyl-Anteilen im Molverhältnis zwischen 5:95 und 30:70 liegt.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die Farbstoffmischungen als Farbstoffpulver mit einem Gehalt von 10 bis 80 Gew.-%, bezogen auf das Farbstoffpulver bzw. die Präparation, an einem Elektrolytsalz, das auch als Stellmittel bezeichnet wird, vor. Diese Farbstoffpulver können zudem die erwähnten Puffersubstanzen in einer Gesamtmenge von bis zu 5 %, bezogen auf das Farbstoffpulver enthalten. Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die erfindungsgemäßen Farbstoffmischungen können in üblicher Weise hergestellt werden, so durch mechanisches Mischen der einzelnen Farbstoffe in den erforderlichen Anteilen oder durch Synthese mittels der üblichen Diazotierungs- und Kupplungsreaktionen unter Verwendung von entsprechenden Mischungen der Diazo- und Kupplungskomponenten in einer dem Fachmann geläufigen Weise und den hierzu erforderlichen Mengenanteilen. So kann man beispielsweise in der Weise vorgehen, daß man wäßrige Lösungen der beiden Kupplungskomponenten 1-Amino-8-naphthol-3,6-disulfonsäure und 2-Hydroxy-naphthalin-6-carbonsäure und, als Diazokomponenten, der Anilinverbindungen der allgemeinen Formeln (3a), (3b) und/oder (4) 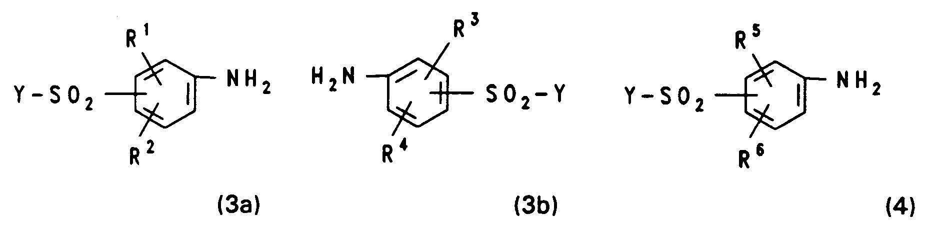 mit R¹, R², R³, R⁴, R⁵, R⁶ und Y der oben genannten Bedeutung in den entsprechenden Anteilen herstellt und diese Anilinverbindungen in üblicher Weise in stark saurem Medium diazotiert und dann die Kupplungsreaktion der 1-Amino-8-naphthol-3,6-disulfonsäure mit einer dieser Diazokomponenten bei einem pH-Wert unterhalb von 1,5 durchführt. Die zweite Kupplungsreaktion mit dem gebildeten Monoazofarbstoff zum Disazofarbstoff erfolgt mit einer weiteren Diazokomponente bei einem pH-Wert zwischen 3 und 6. Anschließend wird durch Hinzufügen der wäßrigen Lösung der 2-Hydroxy-naphthalin-6-carbonsäure und einer weiteren Diazokomponente die Kupplungsreaktion zum Monoazofarbstoff entsprechend der allgemeinen Formel (2) bei einem pH-Wert zwischen 3 und 6 durchgeführt. Die so erhaltene Farbstoffmischung kann aus der Lösung in üblicher Weise isoliert werden, so beispielsweise durch Aussalzen mit einem Elektrolytsalz, wie Natriumchlorid, Kaliumchlorid oder Lithiumchlorid, oder durch Sprühtrocknung.

Farbstoffmischungen, in denen die Farbstoffchromophore beispielsweise neben einer β-Chlorethylsulfonyl- oder β-Thiosulfatoethylsulfonyl- oder β-Sulfatoethylsulfonyl-Gruppe noch Anteile mit Vinylsulfonylgruppen enthalten, können neben der oben genannten Methode durch Einsatz entsprechender Vinylsulfonyl-Ausgangsaniline auch in der Weise hergestellt werden, daß man die Farbstoffmischung, in denen Y für ein β-Chlorethyl- oder β-Thiosulfatoethyl- oder β-Sulfatoethyl-Rest steht, mit einer nur für einen Teil dieser Gruppen erforderlichen Menge an Alkali umsetzt und hierbei einen Teil der genannten β-substituierten Ethylsulfonyl-Gruppen in die Vinylsulfonylgruppen überführt. Diese Maßnahme geschieht nach allgemein bekannten Methoden der Überführung von β-substituierten Ethylsulfonyl-Gruppen in die Vinylsulfonylgruppe.

Die erfindungsgemäßen Farbstoffmischungen aus den Farbstoffen der Formeln (1) und (2) liefern nach den in der Technik für faserreaktive Farbstoffe zahlreich beschriebenen Anwendungs- und Fixierverfahren auf hydroxy- und/oder carbonamidgruppenhaltigen Fasermaterialien tiefschwarze Färbungen mit gutem Farbaufbau und guter Auswaschbarkeit nicht fixierter Farbstoffanteile. Darüberhinaus sind die erhaltenen Färbungen gut ätzbar.

Gegenstand der vorliegenden Erfindung ist deshalb auch die Verwendung der erfindungsgemäßen Farbstoffmischungen zum Färben (einschließlich Bedrucken) von hydroxy- und/oder carbonamidgruppenhaltigen Fasermaterialien bzw. Verfahren zum Färben solcher Fasermaterialien unter Verwendung einer erfindungsgemäßen Farbstoffmischung, indem man die Farbstoffmischung in gelöster Form auf das Substrat appliziert und die Farbstoffe durch Einwirkung eines alkalisch wirkenden Agens oder durch Hitze oder durch beide Maßnahmen auf der Faser fixiert.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole.

Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Anwendung der erfindungsgemäßen Farbstoffmischungen erfolgt nach allgemein bekannten Verfahren zum Färben und Bedrucken von Fasermaterialien gemäß den bekannten Anwendungstechniken für faserreaktive Farbstoffe. Da die Farbstoffe der erfindungsgemäßen Farbstoffmischungen zueinander ein sehr gutes Kombinationsverhalten zeigen, können die erfindungsgemäßen Farbstoffmischungen auch mit Vorteil in den Ausziehfärbeverfahren eingesetzt werden. Demgemäß erhält man mit ihnen beispielsweise auf Cellulosefasern nach den Ausziehverfahren aus langer Flotte bei Temperaturen zwischen 40 und 105°C, gegebenenfalls bei Temperaturen bis zu 130°C unter Druck, und gegebenenfalls in Gegenwart von üblichen Färbereihilfsmitteln unter Verwendung von säurebindenden Mitteln und gegebenenfalls neutralen Salzen, wie Natriumchlorid oder Natriumsulfat, Färbungen in sehr guten Farbausbeuten und mit ausgezeichnetem Farbaufbau und gleicher Nuance. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Ebenfalls erhält man nach den üblichen Druckverfahren für Cellulosefasern, - die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, - farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Farbstoffmischungen erhaltenen Fixiergrade sehr hoch. Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxyde und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat und Dinatriumhydrogenphosphat.

Durch die Behandlung der Farbstoffe der erfindungsgemäßen Farbstoffmischungen mit den säurebindenden Mitteln, gegebenenfalls unter Wärmeeinwirkung, werden die Farbstoffe chemisch an die Cellulosefaser gebunden; insbesondere die Cellulosefärbungen Zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

### Beispiel 1

200 Teile eines elektrolytsalzhaltigen Farbstoffpulvers, das den marineblaufärbenden Disazofarbstoff der Formel (A) 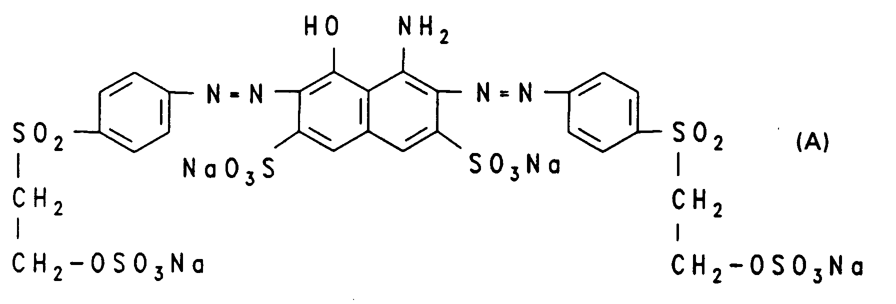 zu 50 % enthält, werden mit 75 Teilen eines elektrolytsalzhaltigen Farbstoffpulvers, das den goldgelbfärbenden Monoazofarbstoff der Formel (B) 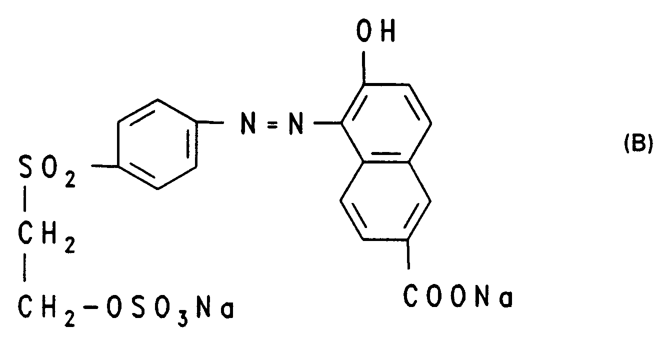 zu 70 % enthält, in einem mechanischen Mischer gemischt. Die erhaltene erfindungsgemäße Farbstoffmischung ergibt nach den in der Technik für faserreaktive Farbstoffe üblichen Applikations- und Fixierverfahren beispielsweise auf Cellulosefasermaterialien Färbungen und Drucke in tiefen schwarzen Tönen.

### Beispiel 2

Zur Herstellung einer erfindungsgemäßen Farbstoffmischung stellt man eine Suspension von 288 Teilen 4-(β-Sulfatoethylsulfonyl)-anilin in 250 Teilen Wasser mit etwa 59 Teilen Natriumcarbonat auf einen pH-Wert von 4,5 bis 5 ein, diazotiert die Anilinverbindung mit 143 Volumenteilen einer 38 %igen wäßrigen Natriumnitritlösung nach Zugabe von 234 Volumenteilen einer 30 %igen wäßrigen Salzsäure und 400 Teilen Eis, gibt sodann 112 Teile 1-Amino-8-naphthol-3,6-disulfonsäure hinzu und führt die erste Kupplungsreaktion bei einem pH-Wert zwischen 1 und 1,3 und einer Temperatur von unterhalb 20°C durch (der pH-Bereich wird durch etwa 60 Teile Natriumbicarbonat gehalten). Danach gibt man 57 Teile 2-Hydroxy-naphthalin-6-carbonsäure hinzu, stellt mittels Natriumcarbonat einen pH-Wert von 5 bis 6 ein und führt die Kupplungsreaktion bei 20°C und innerhalb dieses pH-Bereiches durch.
Man erhält eine schwarze Farbstofflösung, in welcher die Farbstoffe der in Beispiel 1 genannten Formeln (A) und (B) im Verhältnis von 68,7 % zu 31,3 % enthalten sind.
Diese Farbstofflösung kann durch Zugabe von 5 Teilen eines Natriumphosphat-Puffers auf einen pH-Wert von 4,5 eingestellt werden. Durch weiteres Verdünnen mit Wasser oder durch Eindampfen der Lösung kann diese flüssige Farbstoffmischung sodann auf die gewünschte Stärke für eine Flüssigpräparation eingestellt werden, die in üblicher Weise entweder direkt, gegebenenfalls nach Zusatz der entsprechenden Menge an einem alkalisch wirkenden Mittel, als Färbebad oder Färbeflotte verwendet oder der Zubereitung eines Färbebades oder Färbeflotte zugeführt werden. Man erhält mit dieser Farbstoffmischung farbtiefe schwarze Färbungen.

### Beispiel 2a

In gleicher Weise, wie im Beispiel 2 beschrieben, kann eine analoge Farbstoffmischung hergestellt werden, wenn man die Ausgangsverbindungen in der eingesetzten Menge variiert, beispielsweise, indem man das 4-(β-Sulfatoethylsulfonyl)-anilin in einer Menge von 280 Teilen, die 1-Amino-8-naphthol-3,6-disulfonsäure in einer Menge von 102 Teilen und die 2-Hydroxy-naphthalin-6-carbonsäure in einer Menge von 68 Teilen einsetzt. Man erhält so eine Farbstoffmischung, in welcher die Farbstoffe der Formeln (A) und (B) im Verhältnis von etwa 62,7 % zu 37,3 % vorliegen. Die Farbstoffmischung kann aus der Syntheselösung beispielsweise durch Sprühtrocknung isoliert werden oder aber direkt in der gelösten Form als Flüssigpräparation, wie im Beispiel 2 beschrieben, der färberischen Verwendung zugeführt werden. Sie liefert ebenfalls, beispielsweise auf Cellulosefasermaterialien, nach den in der Technik üblichen Applikations- und Fixierverfahren farbtiefe schwarze Färbungen.

### Beispiel 3

Zur Herstellung einer Farbstoffmischung, in der ein Teil der Farbstoffe eine β-Sulfatoethylsulfonyl-Gruppe und der andere Teil der Farbstoffe eine Vinylsulfonylgruppe besitzen, wird von der in Beispiel 2 hergestellten Lösung der erfindungsgemäßen Farbstoffmischung ausgegangen. Man trennt 25 Vol.-% dieser Lösung ab, stellt sie mit Natriumcarbonat auf einen pH-Wert von 8 ein und rührt den Ansatz noch 15 Minuten bei 20°C weiter, wobei die β-Sulfatoethylsulfonyl-Gruppen in die Vinylsulfonyl-Gruppen übergehen. Danach wird mittels Schwefelsäure ein pH-Wert von 4,5 eingestellt und diese Lösung des Vinylsulfonyl-Farbstoffgemisches zu der ursprünglichen Lösung des β-Sulfatoethylsulfonyl-Farbstoffgemisches gegeben. Man erhält eine wäßrige Lösung von Farbstoffen entsprechend den allgemeinen Formeln (A-1) und (B-1) 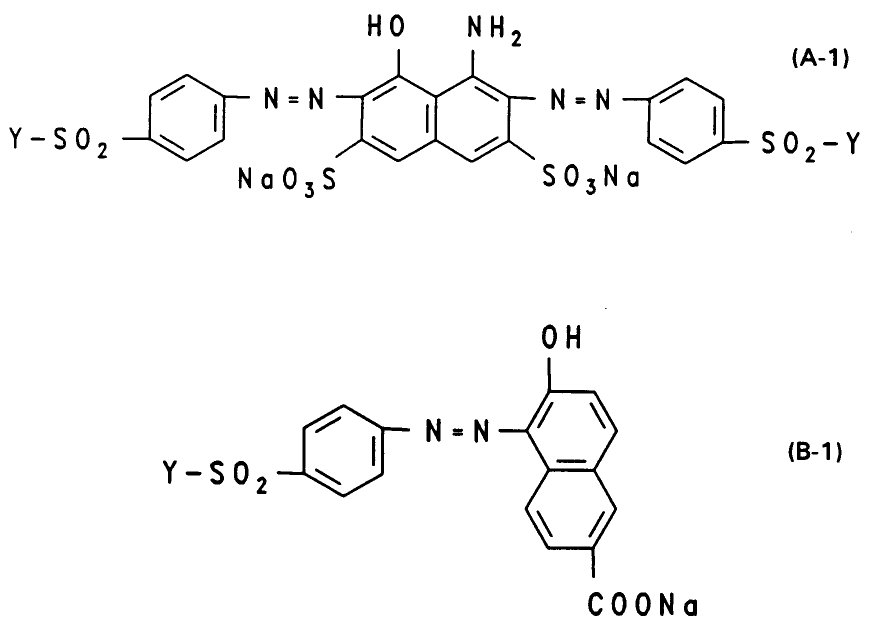 in welchen Y zu 25 % Vinyl und 75 % β-Sulfatoethyl bedeutet. Anorganische Salze wie Natriumsulfat, die durch diese Maßnahme zusätzlich in die wäßrigen Farbstofflösungen gelangt sind, können teilweise durch Abkühlung der Lösung auf 0°C ausgeschieden und abfiltriert werden.

Das Filtrat wird mit 5 Teilen eines Natriumphosphat-Puffers auf einen pH-Wert von 4,5 eingestellt. Durch Hinzufügen oder durch Verdampfen von Wasser kann diese wäßrige Lösung für eine Flüssigpräparation auf die gewünschte Stärke eingestellt und in der in Beispiel 2 angegebenen Weise der färberischen Verwendung zugeführt werden. Man erhält nach den in der Technik für faserreaktive Farbstoffe üblichen Applikations- und Fixierverfahren farbtiefe schwarze Färbungen und Drucke.

### Beispiel 4

Zur Herstellung einer erfindungsgemäßen Farbstoffmischung stellt man eine Suspension von 118 Teilen 4-(β-Sulfatoethylsulfonyl)-anilin in 100 Teilen Wasser mit 20 Teilen Natriumcarbonat auf einen pH-Wert von 4,5 bis 5 ein, rührt einige Zeit nach und diazotiert sodann mit 59 Volumenteilen einer 38 %igen Natriumnitritlösung nach Zugabe von 100 Volumenteilen einer 31 %igen wäßrigen Salzsäure und 200 Teilen Eis. Nach Beendigung der Diazotierungsreaktion gibt man 134 Teile 1-Amino-8-naphthol-3,6-disulfonsäure hinzu, führt die erste Kupplungsreaktion unter Einhaltung eines pH-Wertes von 1 bis 1,3 und bei Temperatur von unterhalb 20°C durch und isoliert sodann die erhaltene Monoazoverbindung durch Aussalzen mit Natriumchlorid.

In einem getrennten Ansatz versetzt man eine Lösung von 261 Teilen 2-Methoxy-5-(β-sulfatoethylsulfonyl)-anilin in 300 Teilen Wasser mit 190 Volumenteilen einer 31 %igen wäßrigen Salzsäure und 300 Teilen Eis und diazotiert mit Hilfe von 117,5 Volumenteilen einer 38 %igen wäßrigen Natriumnitritlösung. Zu dieser Diazoniumsalzlösung gibt man sodann die nach den obigen Angaben erhaltene Monoazoverbindung sowie 79 Teile 2-Hydroxy-naphthalin-6-carbonsäure und führt die Kupplungsreaktion unter Einhaltung eines pH-Wertes zwischen 5 und 6 und bei Temperatur von etwa 20°C durch.

Die so erhaltene Lösung einer erfindungsgemäßen Farbstoffmischung des Farbstoffes der Formel (A) und des Farbstoffes (C) 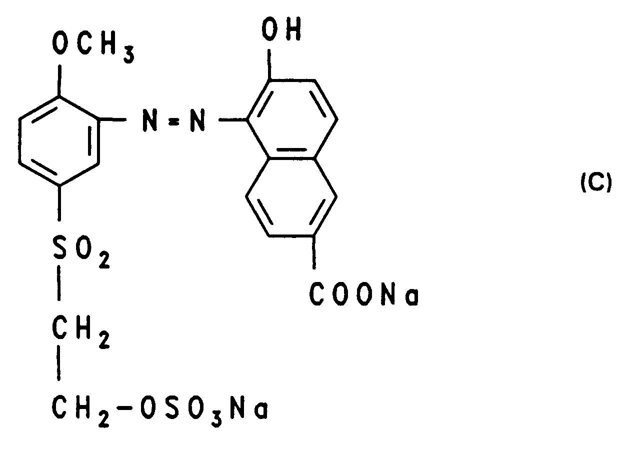 kann entweder direkt nach Isolierung der Farbstoffmischung aus der Syntheselösung durch Sprühtrocknung oder durch Aussalzen mit Natriumchlorid oder direkt in der gelösten Form der färberischen Verwendung in an und für sich üblicher Verfahrensweise zugeführt werden. Man erhält ebenfalls, beispielsweise auf Cellulosefasermaterialien nach den für faserreaktive Farbstoffe üblichen Applikations- und Fixierverfahren, Färbungen von tiefschwarzer Nuance.

### Beispiel 5

80 Teile eines elektrolythaltigen Farbstoffpulvers, das den orangefärbenden Monoazofarbstoff der obengenannten Formel (C) zu 70 % enthält, 200 Teile eines elektrolythaltigen Farbstoffpulvers, das den marineblaufärbenden Disazofarbstoff der Formel (A) zu 50 % enthält, und - zum Zwecke des Nuancierens - 20 Teile eines elektrolythaltigen Farbstoffpulvers, das den gelbfärbenden Monoazofarbstoff der Formel (E) 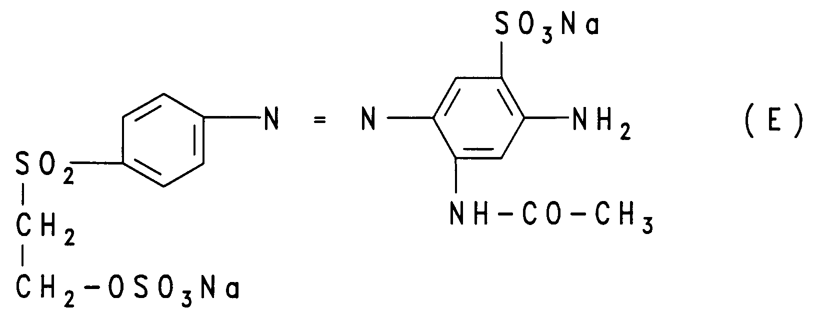 zu 50 % enthält, werden miteinander in einem mechanischen Mischer gemischt. Die erfindungsgemäße Farbstoffmischung ergibt unter Anwendung der nach dem Stand der Technik für faserreaktive Farbstoffe üblichen Applikations- und Fixierverfahren beispielsweise auf Cellulosefasermaterialien Färbungen und Drucke in tiefen schwarzen Tönen.

### Beispiel 6

Zur Herstellung einer erfindungsgemäßen Farbstoffmischung verfährt man gemäß den Angaben des Beispiels 2a, indem man jedoch die Ausgangsverbindungen durch folgende Ausgangsverbindungen bzw. Mengen ersetzt: 290 Teile 4-(8-Sulfatoethylsulfonyl)-anilin, 102 Teile 1-Amino-8-naphthol-3,6-disulfonsäure, 64 Teile 2-Hydroxy-naphthalin-6-carbonsäure und 17 Teile 1-Benzoylamino-8-naphthol-3,6-disulfonsäure.

Man erhält eine Farbstoffmischung, die Cellulosefasermaterialien in einem tiefen Schwarz färbt.

### Beispiel 7

72,4 Teile eines elektrolytsalzhaltigen Farbstoffpulvers, das den marineblaufärbenden Disazofarbstoff der Formel (A) zu 50 % enthält, werden mit 27,54 Teilen eines elektrolytsalzhaltigen Farbstoffpulvers, das den goldgelbfärbenden Monoazofarbstoff der Formel (B) zu 50 % enthält, in einem mechanischen Mischer gemischt. Die erhaltene erfindungsgemäße Farbstoffmischung, in welcher die Farbstoffe (A) und (B) im Verhältnis von 2,63 : 1 vorliegen, ergibt nach den in der Technik für faserreaktive Farbstoffe üblichen Applikations- und Fixierverfahren beispielsweise auf Cellulosefasermaterialien Färbungen und Drucke in tiefen schwarzen Tönen. Neben einem guten Farbaufbau ist die gute Auswaschbarkeit der nichtfixierten Farbstoffanteile hervorzuheben. Die Färbung ist ätzbar.

### Beispiele 8 bis 11

In den nachfolgenden Tabellenbeispielen sind weitere erfindungsgemäße Farbstoffmischungen aus den Farbstoffen entsprechend den allgemeinen Formeln (10) und (11) 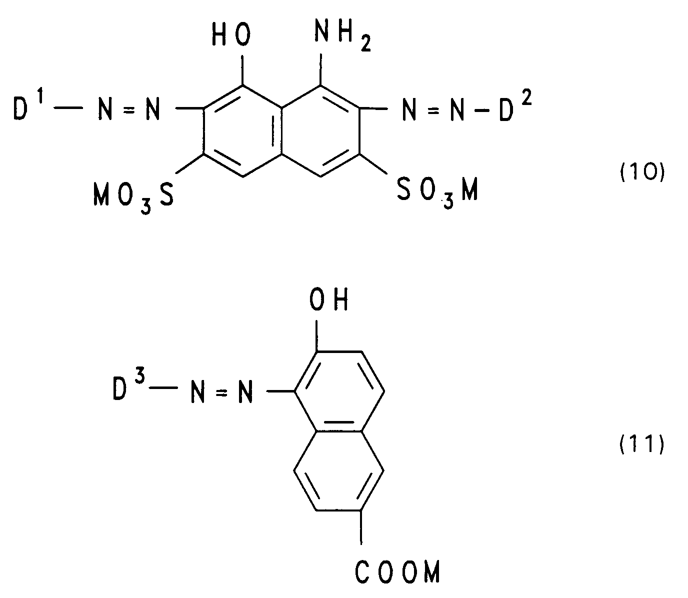 mit Hilfe der Komponenten dieser Farbstoffe beschrieben (M hat hierbei eine der obengenannten Bedeutungen). Auch diese Farbstoffmischungen ergeben in dem erfindungsgemäßen Mischungsverhältnis beispielsweise auf Cellulosefasermaterialien nach den in der Technik für faserreaktive Farbstoffe übliche Applikations- und Fixierverfahren tiefschwarze Färbungen.

| | Farbstoffmischung aus | | |
|---|---|---|---|
| | Disazofarbstoff (10) | | Monoazofarbstoff (11) |
| Bsp. | Rest D¹ | Rest D² | Rest D³ |
| 8 | 4-(β-Sulfatoethylsulfonyl)-phenyl | 4-(β-Sulfatoethylsulfonyl)-phenyl | 2-Methoxy-5-(β-sulfatoethylsulfonyl)-phenyl |
| 9 | 3-(β-Sulfatoethylsulfonyl)-phenyl | 3-(β-Sulfatoethylsulfonyl)-phenyl | 4-(β-Sulfatoethylsulfonyl)-phenyl |
| 10 | 2-Methoxy-5-(β-sulfatoethylsulfonyl)-phenyl | 2-Methoxy-5-(β-sulfatoethylsulfonyl)-phenyl | 3-(β-Sulfatoethylsulfonyl)-phenyl |
| 11 | 4-(β-Sulfatoethylsulfonyl)-phenyl | 4-(β-Sulfatoethylsulfonyl)-phenyl | 3-(β-Sulfatoethylsulfonyl)-phenyl |

## Patentansprüche

1. Farbstoffmischung von einem oder mehreren Disazofarbstoffen entsprechend der allgemeinen Formel (1) und einem oder mehreren Monoazofarbstoffen entsprechend der allgemeinen Formel (2) 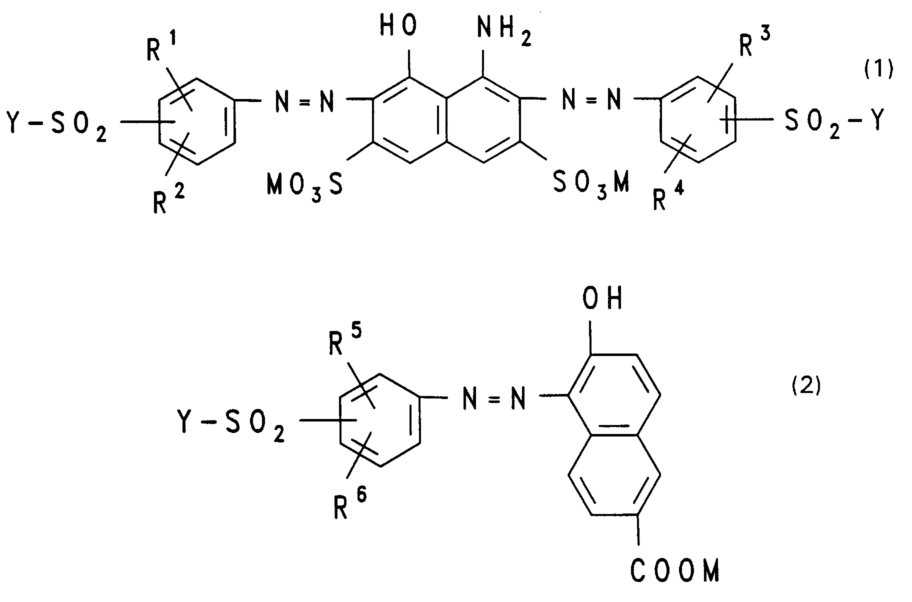 in welchen
R¹, R³ und R⁵ jedes, unabhängig voneinander, Wasserstoff oder Methoxy bedeuten und R², R⁴ und R⁶ jedes Wasserstoff ist,
Y jedes, unabhängig voneinander, Vinyl, β-Chlorethyl, β-Thiosulfatoethyl oder β-Sulfatoethyl ist und
M Wasserstoff oder ein Alkalimetall ist,
mit einem Gehalt des oder der Disazofarbstoffe der Formel (1) von 50 bis 95 Gew.-% und des oder der Farbstoffe der Formel (2) von 5 bis 50 Gew.-%.

2. Farbstoffmischung nach Anspruch 1, gekennzeichnet durch den Gehalt eines oder mehrerer Disazofarbstoffe entsprechend der allgemeinen Formel (1) von 60 bis 80 Gew.-% und eines oder mehrerer Monoazofarbstoffe entsprechend der allgemeinen Formel (2) von 40 bis 20 Gew.-%.

3. Farbstoffmischung nach Anspruch 1 oder 2, dadurch gekennzeichnet, daß R¹, R², R³, R⁴, R⁵ und R⁶ jedes Wasserstoff bedeuten.

4. Farbstoffmischung nach mindestens einem der Ansprüche 1 bis 3, dadurch gekennzeichnet, daß Y jedes unabhängig voneinander Vinyl oder β-Sulfatoethyl bedeutet.

5. Farbstoffmischung nach Anspruch 1 mit einem oder mehreren Disazofarbstoffen entsprechend der allgemeinen Formel (10) und einem oder mehreren Monoazofarbstoffen entsprechend der allgemeinen Formel (11) 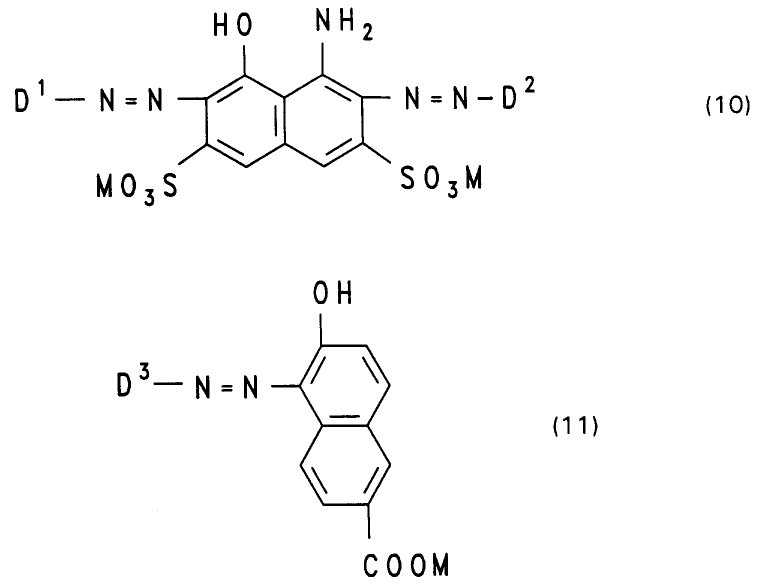 in welchen D¹, D² und D³ jedes, unabhängig voneinander, 3-Vinylsulfonyl-phenyl, 4-Vinylsulfonyl-phenyl, 3-(β-Sulfatoethylsulfonyl)-phenyl oder 4-(β-Sulfatoethylsulfonyl)-phenyl ist und M die in Anspruch 1 genannte Bedeutung besitzt.

6. Farbstoffmischung nach Anspruch 1 mit einem oder mehreren Disazofarbstoffen entsprechend der allgemeinen Formel (10) und einem oder mehreren Monoazofarbstoffen entsprechend der allgemeinen Formel (11) 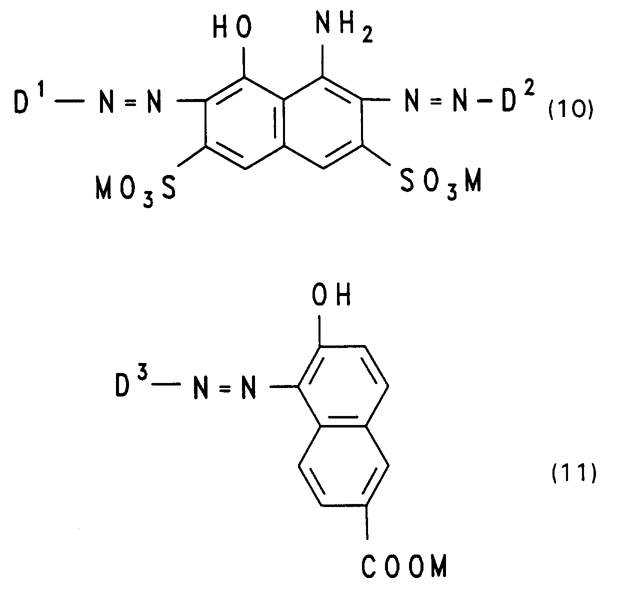 in welchen D¹ und D² beide, unabhängig voneinander, 3-(β-Sulfatoethylsulfonyl)-phenyl, 4-(β-Sulfatoethylsulfonyl)-phenyl, 3-Vinylsulfonyl-phenyl oder 4-Vinylsulfonyl-phenyl bedeuten und D³ 2-Methoxy-5-(β-sulfatoethylsulfonyl)-phenyl oder 2-Methoxy-5-vinylsulfonyl-phenyl ist und M die in Anspruch 1 genannte Bedeutung besitzt.

7. Farbstoffmischung nach mindestens einem der Ansprüche 1 bis 6, dadurch gekennzeichnet, daß die Farbstoffe als Gemisch von Vinylsulfonyl- und β-Sulfatoethylsulfonyl-Farbstoffen vorliegen und der Anteil an Vinylsulfonyl-Farbstoffen zu β-Sulfatoethylsulfonyl-Farbstoffen im Molverhältnis zwischen 5:95 und 30:70 liegt.

8. Farbstoffmischung nach mindestens einem der Ansprüche 1 bis 7, dadurch gekennzeichnet, daß sie zur Nuancierung zusätzlich einen gelben oder roten Farbstoff enthält.

9. Wäßrige Flüssigpräparation, enthaltend eine Farbstoffmischung nach mindestens einem der Ansprüche 1 bis 8 mit einem Gesamtfarbstoffgehalt von 5 bis 50 Gew.-%.

10. Verwendung einer Farbstoffmischung oder -präparation nach mindestens einem der Ansprüche 1 bis 9 zum Färben und Bedrucken von hydroxy- und/oder carbonamidgruppenhaltigem Fasermaterial.

11. Verfahren zum Färben und Bedrucken von hydroxy- und/oder carbonamidgruppenhaltigem Fasermaterial, bei welchem man einen Farbstoff oder eine Mischung von Farbstoffen auf das Material aufbringt und den oder die Farbstoffe auf dem Material mittels Wärme oder mit Hilfe eines alkalisch wirkenden Mittels oder mittels Wärme und mit Hilfe eines alkalisch wirkenden Mittels fixiert, dadurch gekennzeichnet, daß die Farbstoffe eine Farbstoffmischung oder -präparation von mindestens einem der Ansprüche 1 bis 9 sind.

## Claims

1. A dye mixture of one or more disazo dyes conforming to the formula (1) and one or more monoazo dyes conforming to the formula (2) 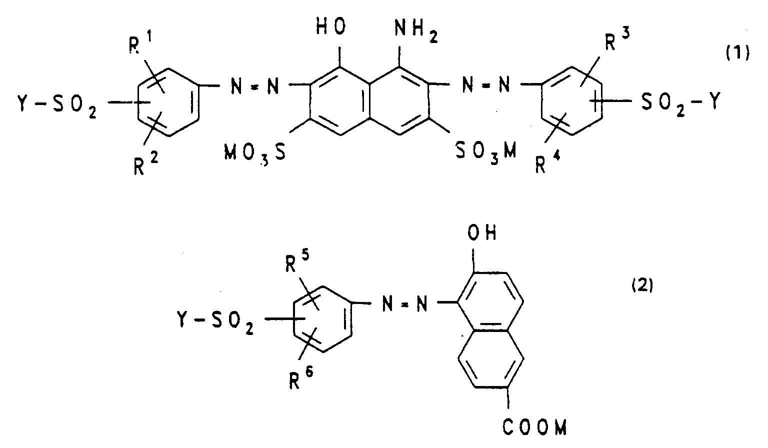 where
R¹, R³ and R⁵ are each independently of the others hydrogen or methoxy and R², R⁴ and R⁶ are each hydrogen,
Y is in each instance independently of the others vinyl, β-chloroethyl, β-thiosulfatoethyl or β-sulfatoethyl, and
M is hydrogen or an alkali metal,
comprising an amount of from 50 to 95 % by weight in respect of the disazo dye(s) of the formula (1) and of from 5 to 50 % by weight in respect of the dye(s) of the formula (2).

2. The dye mixture of claim 1, wherein the one or more disazo dyes conforming to the formula (1) account for from 60 to 80 % by weight and the one or more monoazo dyes conforming to the formula (2) account for from 40 to 20 % by weight.

3. The dye mixture of claim 1 or 2, wherein R¹, R², R³, R⁴, R⁵ and R⁶ are each hydrogen.

4. The dye mixture of at least one of claims 1 to 3, wherein Y is in each instance independently of the others vinyl or β-sulfatoethyl.

5. The dye mixture of claim 1 comprising one or more disazo dyes conforming to the formula (10) and one or more monoazo dyes conforming to the formula (11) 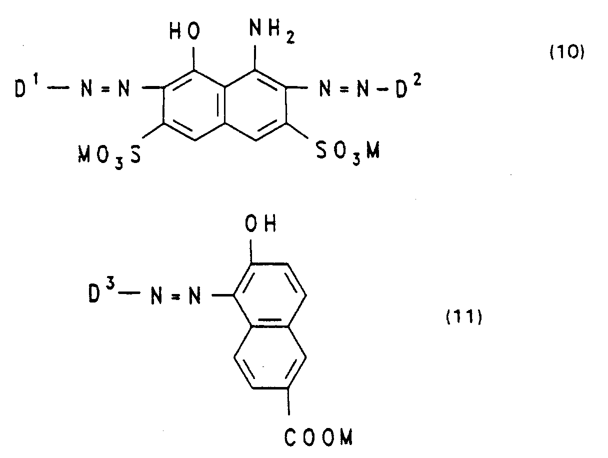 where D¹, D² and D³ are each independently of the others 3-vinylsulfonylphenyl, 4-vinylsulfonylphenyl, 3-(β-sulfatoethylsulfonyl)phenyl or 4-(β-sulfatoethylsulfonyl)phenyl and M is as defined in claim 1.

6. The dye mixture of claim 1 comprising one or more disazo dyes conforming to the formula (10) and one or more monoazo dyes conforming to the formula (11) 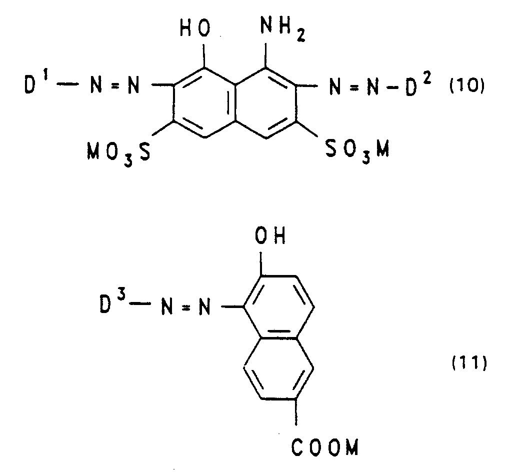 where D¹ and D² are both independently of the other 3-(β-sulfatoethylsulfonyl)phenyl, 4-(β-sulfatoethylsulfonyl)phenyl, 3-vinylsulfonylphenyl or 4-vinylsulfonylphenyl and D³ is 2-methoxy-5-(β-sulfatoethylsulfonyl)phenyl or 2-methoxy-5-vinylsulfonylphenyl and M is as defined in claim 1.

7. The dye mixture of at least one of claims 1 to 6, wherein the dyes are present as a mixture of vinylsulfonyl and β-sulfatoethylsulfonyl dyes and the proportion of vinylsulfonyl dye to β-sulfatoethylsulfonyl dye is in a molar ratio between 5:95 and 30:70.

8. The dye mixture of at least one of claims 1 to 7 further comprising a yellow or red shading dye.

9. An aqueous liquid preparation comprising a dye mixture as claimed in at least one of claims 1 to 8 with a total dye content of from 5 to 50 % by weight.

10. The use of a dye mixture or preparation as claimed in at least one of claims 1 to 9 for dyeing and printing hydroxyl- and/or carboxamido-containing fiber material.

11. A process for dyeing and printing hydroxyl- and/or carboxamido-containing fiber material by applying a dye or a mixture of dyes to the material and fixing the dye(s) to the material by means of heat or with the aid of an alkali or by means of heat and with the aid of an alkali, characterized in that the dyes are a dye mixture or preparation as claimed in at least one of claims 1 to 9.

## Revendications

1. Mélange de colorants d'un ou de plusieurs colorants disazoïques de formule générale (1) et d'un ou de plusieurs colorants monoazoïques de formule générale (2) 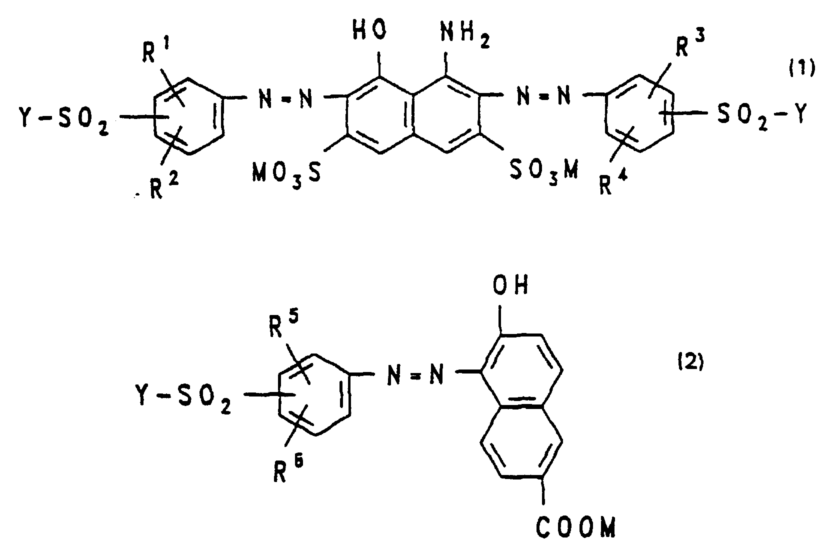 dans lesquelles
R¹, R³ et R⁵ représentent chacun, indépendamment les uns des autres, un hydrogène ou un méthoxy et R², R⁴ et R⁶ représentent chacun un hydrogène,
chaque Y représente indépendamment un vinyl, un β-chloroéthyle, un β-thiosulfatoéthyle ou un β-sulfatoéthyle, et
M représente un hydrogène ou un métal alcalin,
avec une teneur du ou des colorants disazoïques de formule (1) de 50 à 95% en poids et du ou des colorants de formule (2) de 5 à 50% en poids.

2. Mélange de colorants selon la revendication 1, caractérisé en ce que la teneur en un ou plusieurs colorants disazoïques de formule générale (1) est de 60 à 80% en poids et la teneur en un ou plusieurs colorants monoazoïques de formule générale (2) est de 40 à 20% en poids.

3. Mélange de colorants selon la revendication 1 ou 2, caractérisé en ce que R¹, R², R³, R⁴, R⁵ et R⁶ représentent chacun un hydrogène.

4. Mélange de colorants selon au moins l'une des revendications 1 à 3, caractérisé en ce que chaque Y représente indépendamment un vinyl ou un β-sulfatoéthyle.

5. Mélange de colorants selon la revendication 1, avec un ou plusieurs colorants disazoïques de formule générale (10) et un ou plusieurs colorants monoazoïques de formule générale (11) 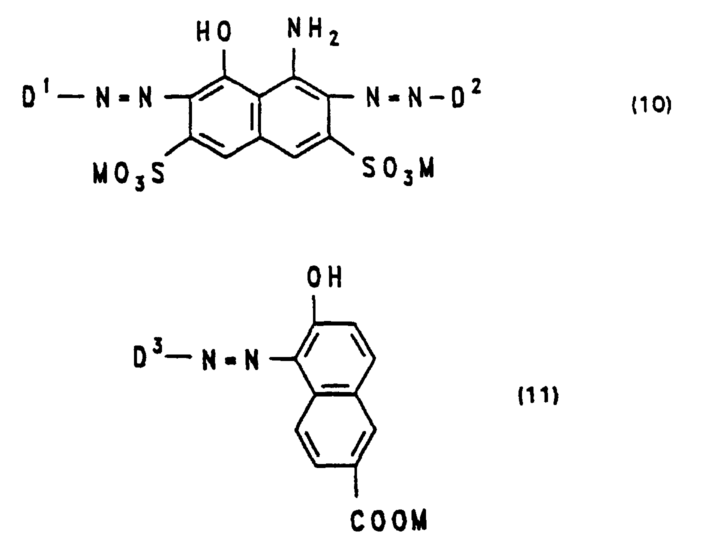 dans lesquelles D¹, D² et D³ représentent chacun, indépendamment les uns des autres, un 3-vinylsulfonylphényle, un 4-vinylsulfonylphényle, un 3-(β-sulfatoéthylsulfonyl)phényle ou un 4-(β-sulfatoéthylsulfonyl)phényle et M est tel que défini à la revendication 1.

6. Mélange de colorants selon la revendication 1, avec un ou plusieurs colorants disazoïques de formule générale (10) et un ou plusieurs colorants monoazoïques de formule générale (11) 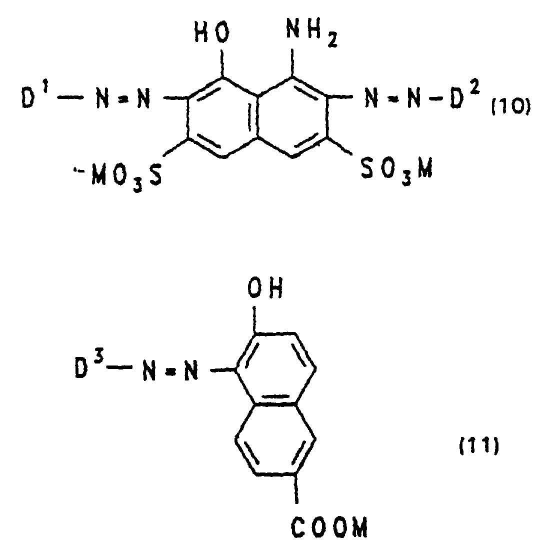 dans lesquelles D¹ et D² représentent tous les deux, indépendamment l'un de l'autre, un 3-(β-sulfatoéthylsulfonyl)phényle, un 4-(β-sulfatoéthylsulfonyl)phényle, un 3-vinylsulfonylphényle ou un 4-vinylsulfonylphényle, et D³ représente un 2-méthoxy-5-(β-sulfatoéthylsulfonyl)phényle ou un 2-méthoxy-5-vinylsulfonylphényle, et M est tel que défini à la revendication 1.

7. Mélange de colorants selon au moins l'une des revendications 1 à 6, caractérisé en ce que les colorants sont présents sous forme de mélange de colorants vinylsulfonylés et β-sulfatoéthylsulfonylés et la proportion de colorants vinylsulfonylés par rapport aux colorants β-sulfatoéthylsulfonylés est à un rapport molaire compris entre 5:95 et 30:70.

8. Mélange de colorants selon au moins l'une des revendications 1 à 7, caractérisé en ce qu'il contient en outre un colorant jaune ou rouge en vue du nuançage.

9. Préparation liquide aqueuse contenant un mélange de colorants selon au moins l'une des revendications 1 à 8, avec une teneur totale en colorants de 5 à 50% en poids.

10. Utilisation d'un mélange ou d'une préparation de colorants selon au moins l'une des revendications 1 à 9, pour la teinture et l'impression d'une matière fibreuse renfermant des groupes hydroxy et/ou carbonamide.

11. Procédé de teinture et d'impression d'une matière fibreuse renfermant des groupes hydroxy et/ou carbonamide, dans lequel on applique un colorant ou un mélange de colorants sur la matière et on fixe le ou les colorants sur la matière à la chaleur ou à l'aide d'un agent alcalin, ou à la chaleur et à l'aide d'un agent alcalin, caractérisé en ce que les colorants sont un mélange ou une préparation de colorants selon au moins l'une des revendications 1 à 9.
